Europäisches Patentamt

European Patent Office

Office européen des brevets

(11) Veröffentlichungsnummer: **0 162 966**
A2

(12) **EUROPÄISCHE PATENTANMELDUNG**

(21) Anmeldenummer: **84116133.4**

(22) Anmeldetag: **21.12.84**

(51) Int. Cl.⁴: **H 02 K 37/14**

(30) Priorität: **29.05.84 DE 3420034**

(43) Veröffentlichungstag der Anmeldung:
**04.12.85 Patentblatt 85/49**

(84) Benannte Vertragsstaaten:
**DE FR GB IT NL SE**

(71) Anmelder: **VDO Adolf Schindling AG**
**Gräfstrasse 103**
**D-6000 Frankfurt/Main(DE)**

(72) Erfinder: **Sudler, Roland**
**Gr. Seestrasse 8**
**D-6000 Frankfurt/Main(DE)**

(74) Vertreter: **Klein, Thomas, Dipl.-Ing. (FH)**
**Sodener Strasse 9 Postfach 6140**
**D-6231 Schwalbach a. Ts.(DE)**

(54) **Elektrischer Schrittmotor.**

(57) Die Erfindung betrifft einen elektrischen Schrittmotor mit einem drehbar gelagerten Rotor (2), der mit permanentmagnetischen Polen (1) abwechselnder Polarität ausgebildet ist, die mit gleichmäßigem, gegenseitigem Abstand verteilt am Mantel des Rotors (2) angeordnet sind.

Ein Stator besteht aus einer mit Stromimpulsen ansteuerbaren Spule, einem Kern und zwei Polstücken (3, 3'), wobei die freien Enden der Polstücke (3, 3') zu den Polen (1) des Rotors (2) gerichtet sind.

Weiterhin ist ein mit einem gegenüber einem Polstück (3) in Umfangsrichtung des Rotors (2) versetzt angeordneter Hilfspol (7) vorhanden. Der Hilfspol (7) besteht aus einem mit einer Hilfspolspule (9) umschlossenen Eisenkern (8) und einem zum Rotor (2) gerichteten Polschuh (6) und ist mit Stromimpulsen ansteuerbar, die in ihrem Takt den Stromimpulsen der Spule des Stators entsprechen.

FIG. 1

EP 0 162 966 A2

VDO Adolf Schindling

Gräfstraße 103
6000 Frankfurt/Main
G-R Kl-kmo / 1779
23. Mai 1984

## Elektrischer Schrittmotor

Die Erfindung betrifft einen elektrischen Schrittmotor, insbesondere für Uhren, mit einem drehbar gelagerten Rotor, der mit permanentmagnetischen Polen abwechselnder Polarität ausgebildet ist, die mit gleichmäßigem, gegenseitigem Abstand verteilt am Mantel des Rotors angeordnet sind, mit einem aus einer mit Stromimpulsen ansteuerbaren Spule, einem Kern und zwei Polstücken bestehenden Stator, wobei die freien Enden der Polstücke zu den Polen des Rotors gerichtet sind, sowie mit einem gegenüber einem Polstück in Umfangsrichtung des Rotors versetzt angeordneten Hilfspol.

Bei derartigen Schrittmotoren ist es bekannt, an den freien Enden der Polstücke sich in Drehrichtung des Rotors erstreckende Hilfspole anzuformen, durch die die Drehrichtung des Rotors bestimmt wird. Dabei nehmen die Hilfspole immer die gleiche Polarität an, die das Polstück aufweist, an dem der Hilfspol angeformt ist. Damit ist aber immer nur eine bestimmte, durch die Aus-

./.

0162966

bildung der Hilfspole bestimmte Drehrichtung des Rotors möglich.
Eine Drehrichtungsumkehr ist nicht möglich.

Aufgabe der Erfindung ist es daher einen Schrittmotor nach dem Oberbegriff zu schaffen, der auf einfache Weise eine Umkehr der Drehrichtung ermöglicht.

Diese Aufgabe wird erfindungsgemäß dadurch gelöst, daß ein Hilfspol aus einem mit einer Hilfspolspule umschlossenen Eisenkern und einem zum Rotor gerichteten Polschuh besteht und mit Stromimpulsen ansteuerbar ist, die ihrem Takt den Stromimpulsen der Spule des Stators entsprechen. Durch diese Ausbildung wird die Drehrichtung des Rotors durch die Polarität bestimmt, die der Polschuh des Hilfspols bei dessen Ansteuerung annimmt.

Bei bipolaren Ansteuerung muß entsprechend der Umpolung der Spule des Stators auch immer eine Umpolung der Hilfspolspule erfolgen.

Besitzen z.B. die Polstücke des Stators angeformte Hilfspole zur Bestimmung einer bestimmten Drehrichtung des Rotors, so kann die entgegengesetzte Drehrichtung durch Ansteuerung eines im stärkeren Maß entgegengesetzt wirkenden Hilfspols mit Hilfspolspule erreicht werden.
Diese Ausbildung ist vorteilhaft anwendbar, wenn der Rotor vorzugsweise nur in eine Drehrichtung betrieben wird, die durch die angeformten Hilfspole bestimmt wird.

Sind keine angeformten Hilfspole vorhanden, so wird auf energiesparende Weise eine Drehrichtungsumkehr des Rotors dadurch erreicht, daß die Stromrichtung der Stromimpulse des Hilfspols umkehrbar ist.

./.

Eine besonders hohe Leistung wird erreicht, wenn der Hilfspol zwei Polschuhe aufweist, die in einem dem Polabstand bzw. einem Vielfachen des Polabstandes der Rotorpole entsprechenden Abstand zum Rotor gerichtet angeordnet sind, wobei vorzugsweise der Hilfspol U-förmig ausgebildet ist. Dabei kann in Drehrichtung des Rotors auf jeder Seite des Polstücks des Stators ein Polschuh des Hilfspols angeordnet sein.

Ein guter Wirkungsgrad ist dadurch erreichbar, daß der Hilfspol um etwa einen halben Polabstand der Rotorpole gegenüber einem Polstück versetzt angeordnet ist. Ist die Hilfspolspule parallel zur Spule des Stators geschaltet, so kann mit geringem Schaltungsaufwand, ohne das Erfordernis einer zweiten Stromimpulsansteuerung, eine gemeinsame Ansteuerung der Spule des Stators und der Hilfspolspule erfolgen.

Ausführungsbeispiele der Erfindung sind in der Zeichnung dargestellt und werden im folgenden näher beschrieben. Es zeigen:

Figur 1    ein erstes Ausführungsbeispiel eines Schrittmotors

Figur 2    ein zweites Ausführungsbeispiel eines Schrittmotors

Figur 3    ein drittes Ausführungsbeispiel eines Schrittmotors

Figur 4    ein viertes Ausführungsbeispiel eines Schrittmotors

Figur 5    eine Schaltung zur Ansteuerung der Schrittmotoren nach den Figuren 2 bis 4.

./.

Die in den Figuren dargestellten Schrittmotoren sinc Einphasenschrittmotoren mit radialen permanentmagnetischen Polen 1 des Rotors 2.

Die Pole 1 der jeweils drei Polpaare sind gleichmässig am Umfang des Rotors 2 verteilt angeordnet.

Zwei Polstücke 3 und 3' eines nicht dargestellten Stators sind mit ihren freien Enden radial zur zylindrischen Mantelfläche des Rotors 2 gerichtet, wobei jedes Polstück 3 und 3' zwei um 120 Grad zueinander versetzte Polfinger 4 und 4' besitzt.

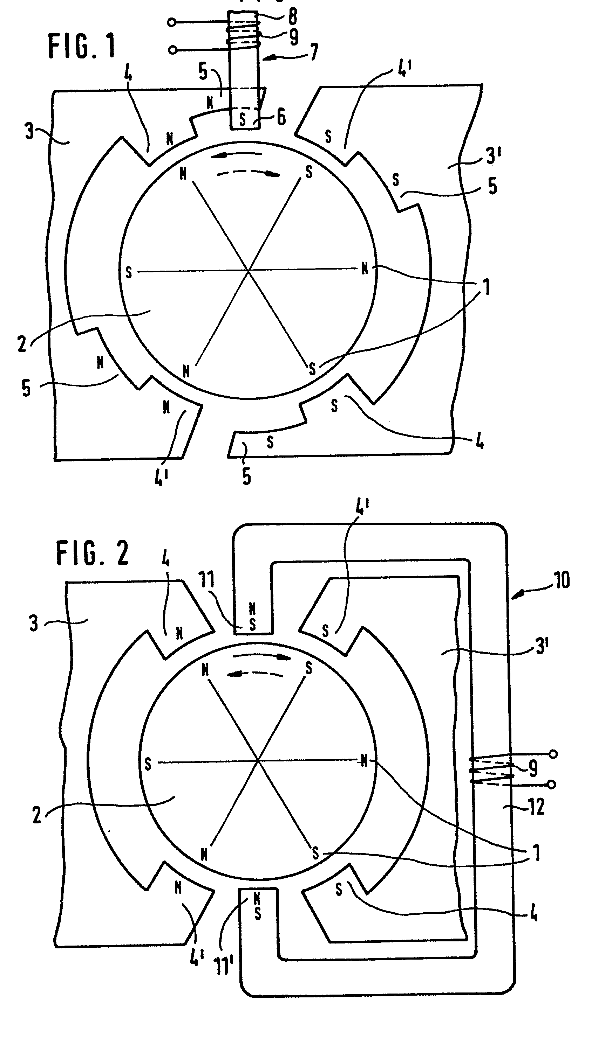

In Figur 1 weisen die Polfinger 4 und 4' im Uhrzeigersinn sich erstreckende, angeformte Hilfspole 5 auf.

Zwischen dem Polfinger 4 des Polstücks 3 und dem Polfinger 4' des Polstücks 3' ist ein Polschuh 6 eines Hilfspols 7 angeordnet.

Der Hilfspol 7 besitzt einen stabförmigen Eisenkern 8, der von einer Hilfspolspule 9 umschlossen ist.

Der Polschuh ist um einen halben Polabstand der Rotorpole 1 von dem Polfinger 4 des Polstücks 3 im Uhrzeigersinn sowie von dem Polfinger 4' des Polstücks 3 entgegen dem Uhrzeigersinn versetzt angeordnet.

Im Normalbetrieb erfolgt nur eine Stromimpulsbeaufschlagung der nicht dargestellten Spule des Stators und keine Ansteuerung der Hilfspolspule 9.

Dies führt aufgrund der Hilfspole 7 entsprechend dem durchgezogen gezeichneten Drehrichtungspfeil zu einer Drehbewegung des Rotors 2 entgegen dem Uhrzeigersinn.

Wird auch die Hilfspolspule 9 im gleichen Takt wie die Statorspule von Stromimpulsen beaufschlagt, so führt der dadurch am Polschuh 6 des Hilfspols 7 erzeugte starke Südpol zu einer Drehbewegung des Rotors 2 im Uhrzeigersinn und damit zu einer Drehrichtungsumkehr.

./.

Die Ausführungsbeispiele der Figuren 2 bis 4 besitzen U-förmige Hilfspole 10 mit jeweils zwei Polschuhen 11 und 11', wobei die Eisenkerne 12 der Hilfspole 10 von einer Hilfspolspule 9 umschlossen sind.

In Figur 2 ist jeweils ein Polschuh 11 bzw. 11' mit gleichem Abstand zwischen dem Polfinger 4 des Polstücks 3 und dem Polfinger 4 des Polstücks 3' bzw. zwischen dem Polfinger 4 des Polstücks 3' und dem Polfinger 4' des Polstücks 3 angeordnet.

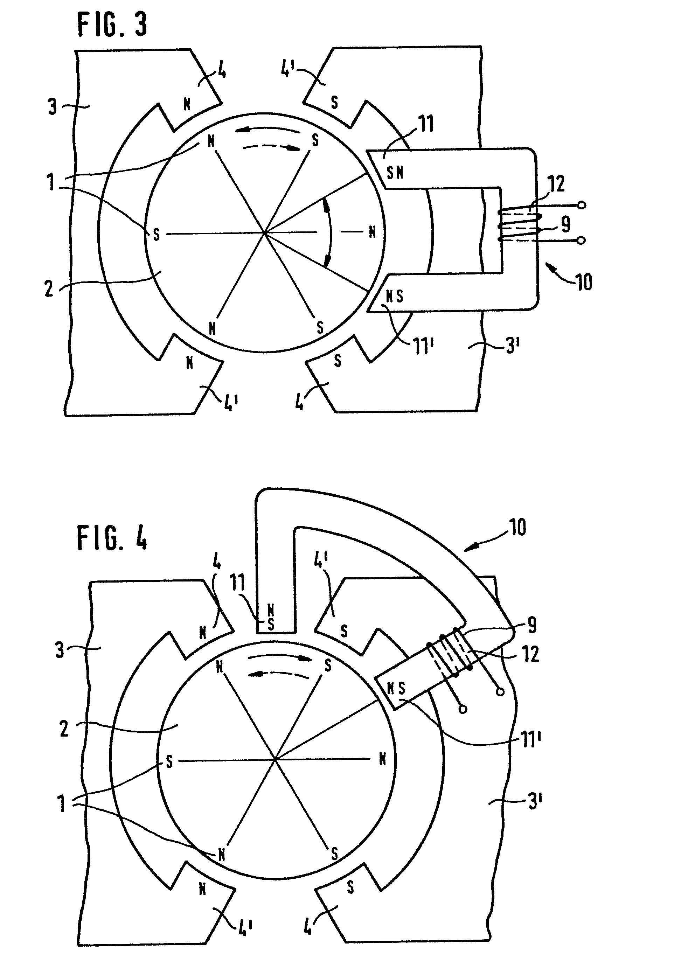

In Figur 3 ist am Polstück 3' der Polschuh 11 zum Polfinger 4 im Uhrzeigersinn und der Polschuh 11' zum Polfinger 4 entgegen dem Uhrzeigersinn versetzt angeordnet.

In Figur 4 ist ein Polschuh 11 bzw. 11' jeweils im Uhrzeigersinn bzw. entgegen dem Uhrzeigersinn zum Polfinger 4' des Polstücks 3' versetzt angeordnet.

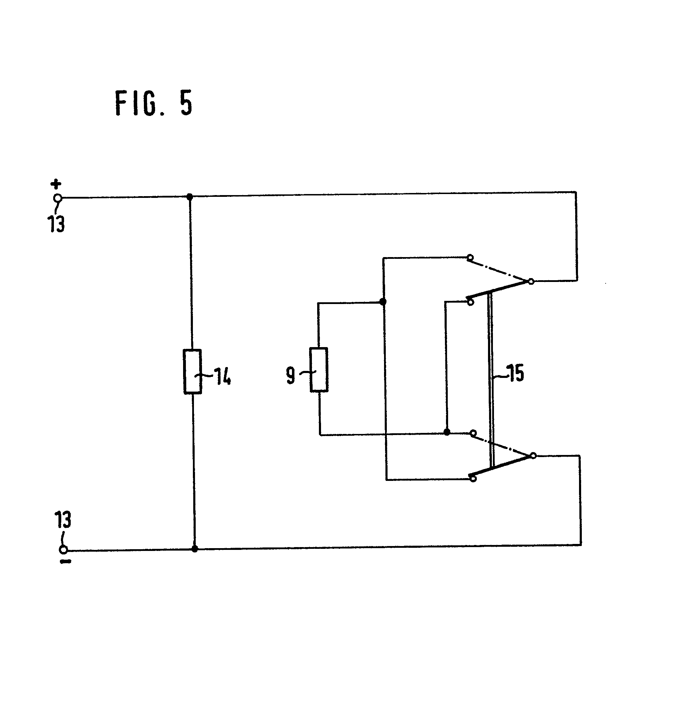

Die Ansteuerung der Schrittmotoren entsprechend der Figuren 2 bis 4 erfolgt mittels einer Schaltung entsprechend Figur 5.
Dabei ist die Schaltung an einen IC-Ausgang 13 angeschlossen, von dem aus eine Stromimpulsbeaufschlagung erfolgt.

An den IC-Ausgang 13 ist sowohl die Spule 14 des Stators als auch die Hilfspolspule 9 angeschlossen, wobei die Spule 14 und die Hilfspolspule 9 zueinander parallel geschaltet sind.
Über einen Wechselschalter 15 ist die Stromrichtung, mit der die Hilfspolspule 9 durchflossen wird, umkehrbar.

Auf diese Weise ist die Polarität der Polschuhe 11 bzw. 11' des Hilfspols 10 und damit auch die Drehrichtung des Rotors 2 umkehrbar.

./.

Dies ist in den Figuren 2 bis 4 durch die im Normalbetrieb mit durchgezogener Linie und im umgeschalteten Betrieb mit unterbrochener Linie dargestellte
Beschriftung der Pole gezeigt. Entsprechend sind auch
die Drehrichtungspfeile mit durchgezogener bzw. unterbrochener Linie gezeichnet.

In einer weiteren, nicht dargestellten Ausführung
können auch zwei separat ansteuerbare Hilfspole angeordnet sein, von denen jeweils ein Hilfspol je
einer Drehrichtung zugeordnet ist.
Durch inaktiv schalten des einen Hilfspols und aktiv
schalten des anderen Hilfspols wird eine Drehrichtungsumkehr des Rotors erreicht.

VDO Adolf Schindling AG          Gräfstraße 103
                                 6000 Frankfurt/Main
                                 G-R Kl-kmo / 1779
                                 23. Mai 1984

Patentansprüche

1. Elektrischer Schrittmotor, insbesondere für Uhren, mit einem drehbar gelagerten Rotor, der mit permanentmagnetischen Polen abwechselnder Polarität ausgebildet ist, die mit gleichmäßigem, gegenseitigem Abstand verteilt am Mantel des Rotors angeordnet sind, mit einem aus einer mit Stromimpulsen ansteuerbaren Spule, einem Kern und zwei Polstücken bestehenden Stator, wobei die freien Enden der Polstücke zu den Polen des Rotors gerichtet sind, sowie mit einem gegenüber einem Polstück in Umfangsrichtung des Rotors versetzt angeordneten Hilfspol, dadurch gekennzeichnet, daß ein Hilfspol (7 bzw. 10) aus einem mit einer Hilfspolspule (9) umschlossenen Eisenkern (8 bzw. 12) und einem zum Rotor (2) gerichteten Polschuh (6 bzw. 11, 11') besteht und mit Stromimpulsen ansteuerbar ist, die in ihrem Takt den Stromimpulsen der Spule (14) des Stators entsprechen.

                                          ./.

2. Elektrischer Schrittmotor nach Anspruch 1, dadurch gekennzeichnet, daß die Stromrichtung der Stromimpulse des Hilfspols (10) umkehrbar ist.

3. Elektrischer Schrittmotor nach einem der vorhergehenden Ansprüche, dadurch gekennzeichnet, daß der Hilfspol (10) zwei Polschuhe (11, 11') aufweist, die in einem dem Polabstand bzw. einem Vielfachen des Polabstands der Rotorpole (1) entsprechenden Abstand zum Rotor (2) gerichtet angeordnet sind.

4. Elektrischer Schrittmotor nach Anspruch 3, dadurch gekennzeichnet, daß der Hilfspol (10) U-förmig ausgebildet ist.

5. Elektrischer Schrittmotor nach einem der vorhergehenden Ansprüche, dadurch gekennzeichnet, daß der Hilfspol (7 bzw. 10) um etwa einen halben Polabstand der Rotorpole (1) gegenüber einem Polstück (3, 3') versetzt angeordnet ist.

6. Elektrischer Schrittmotor nach einem der vorhergehenden Ansprüche, dadurch gekennzeichnet, daß die Hilfspolspule (9) parallel zur Spule (14) des Stators geschaltet ist.

1 / 3

FIG. 1

FIG. 2

**FIG. 3**

**FIG. 4**

FIG. 5